(19) Europäisches Patentamt
European Patent Office
Office européen des brevets

(11) **EP 2 482 048 B1**

(12) **EUROPÄISCHE PATENTSCHRIFT**

(45) Veröffentlichungstag und Bekanntmachung des Hinweises auf die Patenterteilung:
**12.06.2013  Patentblatt 2013/24**

(51) Int Cl.:
*G01J 1/46* *(2006.01)*    *G01J 1/42* *(2006.01)*
*H05B 37/02* *(2006.01)*

(21) Anmeldenummer: **11194755.2**

(22) Anmeldetag: **21.12.2011**

(54) **Verfahren und Vorrichtung zur Messung einer Beleuchtungsstärke und damit versehener Dämmerungsschalter**

Method and device for measuring a lighting level and twilight switch comprising same

Procédé et dispositif de mesure d'une intensité d'éclairage et interrupteur crépusculaire en étant pourvu

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.01.2011  DE 102011000382**

(43) Veröffentlichungstag der Anmeldung:
**01.08.2012  Patentblatt 2012/31**

(73) Patentinhaber: **Legrand GmbH**
**59494 Soest (DE)**

(72) Erfinder: **Baldus, Michael**
**59519 Möhnesee (DE)**

(74) Vertreter: **Reimann, Silke**
**Im Lohfeld 63 a**
**33102 Paderborn (DE)**

(56) Entgegenhaltungen:
**DE-A1- 10 125 307    GB-A- 1 359 105**
**GB-A- 1 535 824    US-A- 5 502 299**

EP 2 482 048 B1

**Beschreibung**

Die Erfindung betrifft ein Verfahren und eine Vorrichtung mit einem Lichtsensor und einer Steuereinheit und zur Messung einer Beleuchtungsstärke. Ebenfalls wird ein damit versehener Dämmerungsschalter beschrieben.

Es sind verschiedene Messvorrichtungen zur Messung einer Beleuchtungsstärke und deren Einsatz in Dämmerungsschaltern bekannt.

Im einfachen Fall wird der Widerstandswert eines Photowiderstandes gemessen. Diese Bauelemente haben den Nachteil, dass sie für hohe Beleuchtungsstärken nicht geeignet sind und die Widerstandswerte weit streuen und stark temperaturabhängig sind. Ein weiterer Nachteil ist darin zu sehen, dass Photowiderstände das toxische Schwermetall Cadmium enthalten. In der Patentschrift DE 27 57 563 C2 ist ein einfacher Dämmerungsschalter mit einem Photowiderstand beschrieben. Der Dämmerungsschalter ist für größere Beleuchtungsstärken nicht geeignet und er muss genau abgeglichen werden.

Die Lichtmessung mit einer genauen Photodiode erfordert üblicherweise einen Transimpedanzverstärker, der im Sensor enthalten sein muss und zusätzliche Versorgungsleitungen benötigt. Ein für eine Blitzleuchte vorgesehener Dämmerungsschalter gemäß der Patentanmeldung DE 32 15 096 A1 nutzt eine Photodiode als Sensor. Dieses Gerät ist für sehr geringe Beleuchtungsstärken nicht geeignet und es muss abgeglichen werden.

Aus der Gebrauchsmusterschrift DE 299 12 801 U1 ist ein Dämmerungsschalter mit einem einfachen Lichtsensor und einer Steuerschaltung bekannt, bei dem die ermittelte Beleuchtungsstärke nach einer Zeitspanne noch einmal überprüft wird und verschiedene Ein- und Ausschaltschwellen festgelegt werden.

In der Patentschrift GB 1 359 105 ist eine Speichervorrichtung für analoge Informationen beschrieben, in der auch eine Beleuchtungsstärke gespeichert werden kann. Die Information wird in einem Kondensator gespeichert und über eine Schalteranordnung an eine Auswerteschaltung weiter geleitet.

In der Patentschrift US 5,502,299 ist Stromteiler für von Beleuchtungsstärken abhängigen Strömen beschrieben, der aus deren Verhältnis ein Ausgangssignal gewonnen wird, das proportional zu einer Beleuchtungsinformation ist.

In der Patentschrift GB 1 359 105 ist ein vorgespannter Lawinenfotodetektor als Empfänger in einem optischen Kommunikationssystem beschrieben, dessen Vorspannung über eine Konstantstromquelle erzeugt ist.

Die Patentschrift DE 696 13 765 T2 beschreibt einen Dämmerungsschalter mit einer optimierten Hysterese zwischen den Ein- und Ausschaltschwellen. Der gesamte, für einen Dämmerungsschalter interessante Bereich der zu messenden Beleuchtungsstärke kann mit einem solchen Gerät nicht abgedeckt werden, es sind mindestens zwei Bereiche vorgesehen. Aus der Patentanmeldung US2009/0109427A1 ist ein Wandler zur Messung von Lichteigenschaften bekannt bei dem eine der Beleuchtungsstärke proportionale Frequenz ausgegeben wird. Die Höhe der Frequenz ist von den Parametern der verwendeten Bauteile abhängig. Die Schaltung ist daher abzugleichen.

Aus der Patentanmeldung DE 101 25 307 A1 ist ein optischer Sensor zur Erfassung eines Nutzlichtsignals bekannt, bei dem ein Störlichtanteil am Sensor durch einen Kompensationsstrom ausgeglichen wird. Dazu ist ein vorheriger Kalibriervorgang erforderlich.

Es ist Aufgabe der Erfindung, eine Vorrichtung und ein Verfahren zum Messen der Beleuchtungsstärke anzugeben, die mit einem zweidrähtig angeschlossenen Sensor auskommt und für einen sehr großen Bereich von Beleuchtungsstärken geeignet ist. Die Vorrichtung soll ohne einen Abgleich während der Produktion und der Installation auskommen. Auch bei einem Auswechseln des Sensors soll kein Abgleich notwendig sein. Die Vorrichtung soll in einem Dämmerungsschalter einsetzbar sein.

Diese Aufgaben werden mit der Vorrichtung gemäß Anspruch 1 und dem Verfahren gemäß Anspruch 8 gelöst. Ein mit der Messvorrichtung ausgestatteter Dämmerungsschalter ist in Anspruch 12 beschrieben.

Vorteilhafte Ausgestaltungen der Vorrichtung, des Verfahrens und des Dämmerungsschalters sind in den Unteransprüchen beschrieben.

Die Vorrichtung zur Messung einer Beleuchtungsstärke ist mit einem Lichtsensor und einer Steuereinheit ausgestattet. Der Lichtsensor besteht nur aus einer in Sperrrichtung betriebenen Photodiode und einem dazu parallel geschalteten Kondensator. Dieser Lichtsensor kann zweidrähtig angeschlossen weit entfernt von der Steuereinheit an einer günstigen Position installiert sein.

Die Steuereinheit enthält eine Ladeschaltung zur Aufladung des Kondensators auf eine Kondensatorspannung und zwei verschiedene Entladestromquellen, die den Kondensator periodisch mit konstanten Strömen entladen, sowie eine Zeitmesseinrichtung, die die Entladezeiten des Kondensators misst. Diese Entladezeiten werden in ein Verhältnis zueinander gesetzt. Mit einer mathematischen Berechnung wird darüber die aktuelle Beleuchtungsstärke bestimmt.

Die Ladeschaltung für den Kondensator besteht in einfacher Form nur aus der zuschaltbaren Spannungsquelle Uco mit einem vernachlässigbaren Innenwiderstand, die den Kondensator des Lichtsensors auflädt.

Da der Lichtsensor nur zweidrähtig angeschlossen wird und die Photodiode in Sperrrichtung betrieben wird, sind eine Polaritätserkennung für den Lichtsensor und ein Polaritätsumschalter vorgesehen. Dazu wird der Lichtsensor über einen Widerstand an die Spannungsquelle Uco angeschlossen und der Spannungsabfall über der Diode gemessen. Wenn nur eine Flussspannung der Diode auftritt, muss die Polarität umgeschaltet werden.

Die Steuereinheit generiert Steuerimpulse, die die beiden Entladestromquellen periodisch ein- und abschalten können. Dabei wird abwechselnd jeweils nur eine Entladestromquelle ein- und wieder abgeschaltet, oder es wird eine Entladestromquelle eingeschaltet und die zweite Entladestromquelle wird periodisch ein- und wieder abgeschaltet.

Die den Kondensator entladenden Ströme müssen in den beiden Messzeiten unterschiedlich groß sein. Dazu ist es vorteilhaft, dass die Stromstärken der beiden Entladestromquellen unterschiedlich sind.

Auch die Verwendung besonders preisgünstiger, stärker tolerierter Stromquellen zur Erzeugung der Entladeströme i1 und i2 kann einfach ermöglicht werden. Dazu wird die Vorrichtung um lediglich einen zusätzlichen Kompensationskondensator erweitert, der auf die gleiche Weise wie der Lichtsensor an die Steuereinheit angeschlossen und periodisch mit dem Lade- und den Entladeströmen (i1, i2) beaufschlagt wird.

Durch die Entladeströme der Stromquellen nimmt die Kondensatorspannung linear ab. In der Steuereinheit sind eine Referenzspannung und ein Komparator vorgesehen, mit denen die Entladezeiten ab dem Einschalten der Entladestromquellen gemessen werden. In der Steuereinheit befindet sich eine Recheneinheit, die aus den Entladezeiten bei den unterschiedlichen Entladeströmen die aktuelle Beleuchtungsstärke bestimmt.

Diese kann an einem Signalausgang in analoger oder digitaler Form ausgegeben werden.

Mit der beschriebenen Vorrichtung wird das Verfahren zur Bestimmung einer Beleuchtungsstärke in einem fortlaufenden Vorgang mit folgenden Schritten ausgeführt:

- Laden des Kondensators auf eine Kondensatorspannung Uco,
- Entladen des Kondensators mit einem ersten Entladestrom i1 bis zur Referenzspannung,
- Messen einer ersten Entladezeit t1 bis zum Erreichen der Referenzspannung,
- Abschalten des ersten Entladestroms i1,
- Erneutes Laden des Kondensators bis zur Kondensatorspannung Uco,
- Einschalten eines zweiten Entladestroms i2 und Entladen des Kondensators bis zur Referenzspannung,
- Messen einer zweiten Entladezeit t2 bis zum Erreichen der Referenzspannung,
- Bestimmung der Beleuchtungsstärke aus den gemessenen Entladezeiten und den zugehörigen Entladeströmen.

Die Bestimmung der jeweiligen Beleuchtungsstärke E erfolgt nach der Formel

$$E = (t2*i2 - t1*i1)/(S(t1-t2)),$$

wobei S konstant ist und die spektrale Empfindlichkeit der Photodiode beschreibt. Der Parameter S wird genau in den Datenblättern zu den Photodioden angegeben.

Die hier angegebene Formel zeigt, dass die gemessene Beleuchtungsstärke nur von dem Parameter S abhängig ist, der eng toleriert selektiert sein kann. Die Entladeströme sind genau bekannt und die Entladezeiten werden mit modernen Mikroprozessoren und Quarzoszillatoren genau gemessen. Das Messergebnis ist unabhängig von der Größe des Kondensators und von Leitungslängen des Anschlusses des Lichtsensors. Mit diesem Verfahren ist es möglich, Beleuchtungsstärken in einem sehr weiten Bereich genau zu messen. Es können fünf Zehnerpotenzen der Beleuchtungsstärke, von 1 - 1.00.000 Lux gemessen werden.

Auch wird das Ziel erreicht, dass bei der Produktion und der Installation der Vorrichtung kein Abgleich erforderlich ist. Ebenso ist bei einem Tausch des Lichtsensors kein Abgleich erforderlich. Ggf. ist nur die Polarität neu zu bestimmen, was ohne einen Bedienereingriff erfolgen kann.

Dazu wird vor der periodischen Bestimmung der Beleuchtungsstärke durch die Steuereinheit die Spannung am Lichtsensor bestimmt und der Polaritätsumschalter so eingestellt, dass die Photodiode in Sperrrichtung betrieben wird.

Bei der Verwendung stärker tolerierter Stromquellen zur Erzeugung der Entladeströme i1 und i2 wird der Kompensationskondensator genutzt. Im Wechsel mit der Messung der Beleuchtungsstärke wird auf diesen das gleiche Messverfahren wie für den Lichtsensor beschrieben angewandt. Weil diesem Kondensator aber keine Photodiode parallel geschaltet ist, ergibt sich aus der anschließenden Berechnung ein Nullpunktskorrekturwert, der schließlich vom Ergebnis der dann folgenden Messung über den Lichtsensor zu subtrahieren ist. Dadurch sind genaue Beleuchtungsmessungen über den gesamten Messbereich auch dann noch möglich, wenn die Entladeströme nur verhältnismäßig ungenau festgelegt worden sind.

Wenn die Vorrichtung als Messgerät genutzt wird, kann die gemessene Beleuchtungsstärke in analoger oder digitaler Form ausgegeben werden.

Für den Einsatz der Vorrichtung als Dämmerungsschalter wird von der Steuereinheit bei Über-, oder Unterschreitung eines eingestellten Schwellwertes ein Schaltsignal an ein Ausgangsschaltglied ausgegeben, über das elektrische Verbraucher, wie Lampen, ein- bzw. ausgeschaltet werden können. Dabei wird über ein Eingabemittel ein Schwellwert für die Beleuchtungsstärke eingestellt, bei dem das Ein- bzw. Ausschalten erfolgen soll. Dazu ist das Eingabemittel mit einer logarithmischen Einstellskala versehen, die mindestens fünf Zehnerpotenzen überdeckt.

Weiterhin ist es vorteilhaft, wenn an dem Dämmerungsschalter eine Zustandsanzeige vorgesehen ist, die die Unter- oder Überschreitung des eingestellten Schwellwertes durch die aktuelle Beleuchtungsstärke unverzögert anzeigt. So kann die aktuelle Beleuchtungsstärke für den Schaltpunkt des Dämmerungsschalters problemlos eingestellt werden.

Vorteilhaft ist in dem Dämmerungsschalter auch eine Zeitverzögerungseinheit vorgesehen, die das Ausgangsschaltglied, bezogen auf die Unter- oder Überschreitung des eingestellten Schwellwertes der Beleuchtungsstärke, zeitverzögert ein- oder ausschaltet. Damit können unnötige Schaltungen infolge kurzfristiger Schwankungen der Beleuchtungsstärke, wie etwa durch Scheinwerfer vorbeifahrender Autos oder durch Blitze, vermieden werden.

Der Dämmerungsschalter ist bevorzugt als ein Einbaugerät ausgeführt, dass in einen Schaltschrank oder einen elektrischen Verteilerschrank eingebaut wird.

Der Dämmerungsschalter kann aber auch als Aufputzgerät mit im Gehäuse integriertem Lichtfühler ausgeführt sein.

Die Erfindung wird anhand der Figuren beispielhaft erläutert.

    Fig. 1 zeigt ein schematisches Blockschaltbild der Vorrichtung.
    Fig. 2 zeigt die Komponenten für die Messung der Entladezeiten.
    Fig. 3 zeigt ein Diagramm der Kondensatorspannung über der Zeit.
    Fig. 4 zeigt die schematische Ansicht eines Dämmerungsschalters mit angeschlossenem Lichtsensor.

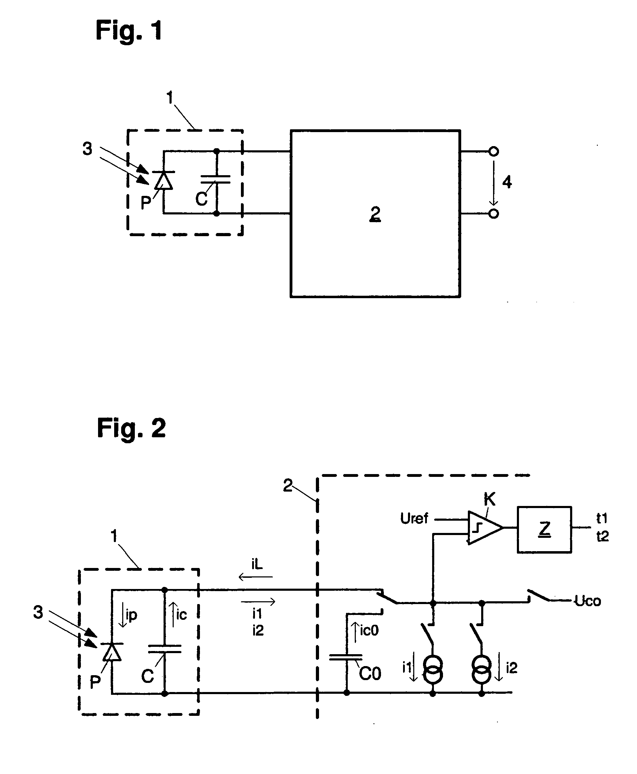

In Fig. 1 ist die Vorrichtung zur Messung der Beleuchtungsstärke schematisch gezeigt. Der Lichtsensor 1 enthält nur einen Kondensator C und eine Photodiode P, auf die der Lichteinfall 3 gelangt. Der Lichtsensor 1 ist an die Steuereinheit 2 angeschlossen, die ein Ausgangssignal 4 für die aktuelle Beleuchtungsstärke ausgeben kann.

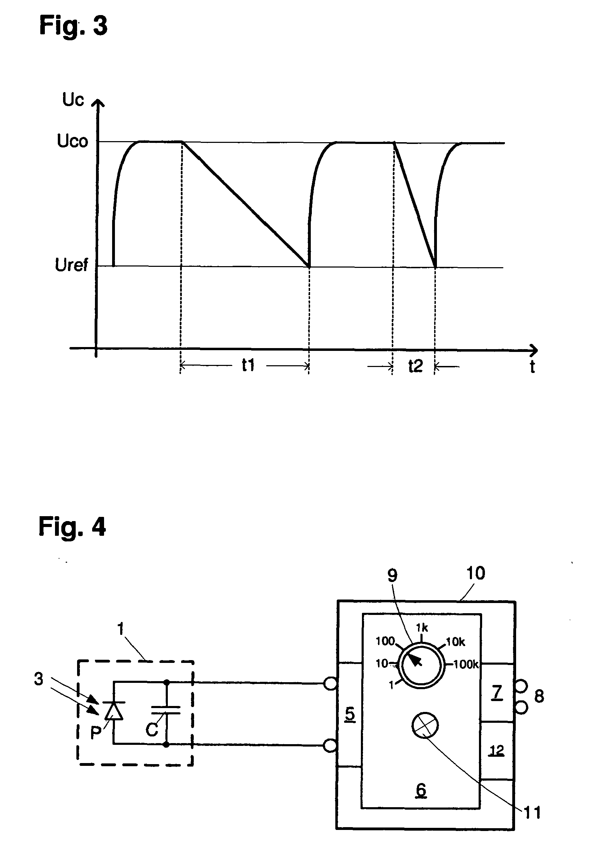

Fig. 2 zeigt detaillierter die Komponenten für die Messung der Entladezeiten, aus denen die Beleuchtungsstärke ermittelt wird. Der Messvorgang ist in dem Diagramm der Fig. 3 als Kondensatorspannung Uc über der Zeit t gezeigt.

Zunächst ist der Kondensator C auf die Aufladespannung Uco durch das Anschalten an die Aufladespannung Uco und damit über den Ladestrom iL aufgeladen.

Durch den Lichteinfall 3 wird in der Photodiode P ein Photostrom ip generiert, der aus dem geladenen Kondensator C entnommen wird. Im nächsten Schritt wird der Ladestrom iL abgeschaltet und die Stromquelle i1 angeschaltet und damit der Kondensator C linear bis zu einer Referenzspannung Uref entladen. Dies wird durch den Komparator K ermittelt und die Zeitspanne t1 bis zur Entladung in der Zeitmesseinrichtung Z bestimmt. Danach wird der Entladestrom i1 abgeschaltet und der Kondensator C wieder auf Uco aufgeladen. Dann beginnt ein nächster Messvorgang durch das Abschalten des Ladestroms iL und das Anschalten des Entladestroms i2, der stärker ist als der Entladestrom i1. Dadurch wird der Kondensator C schneller bis zur Referenzspannung Uref entladen. Auch diese Entladezeit wird in der Zeitmesseinrichtung Z bestimmt.

Je nach Höhe des Photostroms ip und damit der Beleuchtungsstärke E variieren die gemessenen Entladezeiten t1 und t2, da ein Teil des Kondensatorstroms ic als Photostrom ip durch die Photodiode P fließt. So kann nun aus den bekannten Entladeströmen i1 und i2 sowie den gemessenen Entladezeiten t1 und t2 die Beleuchtungsstärke E bestimmt werden. Dies ist über einen weiten Bereich möglich, von unter 1 Lux bis über 100.000 Lux. Da der Parameter S der Photodiode P und die Entladeströme i1 und i2 konstant sind, ist kein Abgleich der Vorrichtung erforderlich.

Die Genauigkeit der Messung wird weiter erhöht, indem der Lichtsensor 1 und der Kompensationskondensator C0 über einen Umschalter wechselweise mit dem Lade-und den Entladeströmen i1, i2 beaufschlagt werden und sich dabei der Kompensationskondensator C0 über den Strom ic0 periodisch entlädt. Weil diesem Kondensator aber keine Photodiode parallel geschaltet ist, ergibt sich aus der anschließenden Berechnung ein Nullpunktskorrekturwert, der schließlich vom Ergebnis der dann folgenden Messung über den Lichtsensor zu subtrahieren ist.

In Fig. 4 ist der Dämmerungsschalter 10 schematisch dargestellt. An ihn ist der Lichtsensor 1 mit der Photodiode P und dem Kondensator C zweidrähtig angeschlossen. Über den Polaritätsumschalter 5 werden die Signale der Recheneinheit 6 zugeführt. Diese besitzt das Einstellmittel 9, an dessen logarithmischer Skala der Schwellwert der Beleuchtungsstärke für das Ein- und Ausschalten des Ausgangschaltgliedes 7 eingestellt wird. Das entsprechende Schaltsignal der Recheneinheit 6 wird ggf. über das Zeitverzögerungsglied 12 zu dem Ausgangsschaltglied 7 geleitet, welches den Ausgang 8 entsprechend ein-, oder ausschaltet.

Auf dem Dämmerungsschalter 10 ist noch eine Zustandsanzeige 11 vorgesehen, mit der die aktuelle Beleuchtungsstärke des Lichteinfalls 3 bestimmt werden kann.

Bezugszeichenliste

1     Lichtsensor

2     Steuereinheit

3     Lichteinfall

4     Ausgangssignal für Beleuchtungsstärke

5 Polaritätsumschalter

6 Recheneinheit

7 Ausgangsschaltglied

8 Ausgang

9 Eingabemittel

10 Dämmerungsschalter

11 Zustandanzeige

12 Zeitverzögerungseinheit

C Kondensator

E Beleuchtungsstärke

ic Kondensatorstrom

ip Photo strom

iL Ladestrom

i1 erster Entladestrom

i2 zweiter Entladestrom

K Komparator

P Photodiode

S Spektrale Empfindlichkeit

t Zeit

t1 erste Entladezeit

t2 zweite Entladezeit

Uc Kondensatorspannung

Uco Aufladespannung

Uref Referenzspannung

Z Zeitmesseinrichtung

**Patentansprüche**

1. Vorrichtung zur Messung einer Beleuchtungsstärke (E) mit einem Lichtsensor (1) und einer Steuereinheit (2), bei der der Lichtsensor (1) aus einer in Sperrrichtung betriebenen Photodiode (P) und einem dazu parallel geschalteten Kondensator (C) besteht,

**dadurch gekennzeichnet, dass** die Steuereinheit (2) eine Ladeschaltung zur Aufladung des Kondensators auf eine Kondensatorspannung (Uco) und zwei Entladestromquellen mit einem ersten Entladestrom (i1) und einem davon verschiedenen zweiten Entladestrom (i2) enthält, die den Kondensator (C) periodisch entladen, und ferner eine Zeitmesseinrichtung (Z) vorhanden ist, die die Entladezeiten (t1, t2) des Kondensators (C) misst, und durch das Verhältnis der Entladezeiten (t1, t2) die Beleuchtungsstärke (E) bestimmt wird.

2. Vorrichtung nach Anspruch 1, **dadurch gekennzeichnet, dass** die Steuereinheit (2) eine Polaritätserkennung sowie einen Polaritätsumschalter (5) für den Lichtsensor (1) besitzt.

3. Vorrichtung nach Anspruch 1, **dadurch gekennzeichnet, dass** die Ladeschaltung aus einer Spannungsquelle (Uco) mit einem vernachlässigbaren Innenwiderstand besteht.

4. Vorrichtung nach Anspruch 1, **dadurch gekennzeichnet, dass** die Steuereinheit Steuerimpulse zum periodischen Einschalten der Entladestromquellen (i1, i2) erzeugt.

5. Vorrichtung nach Anspruch 4, **dadurch gekennzeichnet, dass** abwechselnd jeweils nur eine Entladestromquelle (i1, i2) eingeschaltet wird oder abwechselnd eine und dann beide Entladestromquellen eingeschaltet werden.

6. Vorrichtung nach Anspruch 4, **dadurch gekennzeichnet, dass** in der Steuereinheit (2) eine Referenzspannung (Uref) und ein Komparator (K) vorgesehen sind, mit denen die Entladezeiten (t1, t2) ab dem Einschalten der Entladestromquellen gemessen werden.

7. Vorrichtung nach Anspruch 1, **dadurch gekennzeichnet, dass** in der Steuereinheit (2) eine Recheneinheit (6) vorgesehen ist, die die aktuelle Beleuchtungsstärke (E) aus den Entladezeiten (t1, t2) und den beiden Entladeströmen (i1, i2) bestimmt.

8. Vorrichtung nach Anspruch 7, **dadurch gekennzeichnet, dass** ein Kompensationskondensator (C0) vorgesehen ist, der periodisch mit dem Lade-und den Entladeströmen (i1, i2) beaufschlagt wird.

9. Vorrichtung nach Anspruch 7, **dadurch gekennzeichnet, dass** die Steuereinrichtung (2) die bestimmte Beleuchtungsstärke (E) an einem Signalausgang (4) in analoger oder digitaler Form ausgibt.

**10.** Verfahren zur Bestimmung einer Beleuchtungsstärke mit einem ersten Schritt, in dem eine Vorrichtung nach einem der vorstehenden Ansprüche zu Verfügung gestellt wird,
und einem fortlaufenden Vorgang mit den Schritten:

- Laden des Kondensators (C) auf eine Kondensatorspannung (Uco),
- Entladen des Kondensators mit einem ersten Entladestrom (i1) bis zur Referenzspannung (Uref),
- Messen einer ersten Entladezeit (t1) bis zum Erreichen der Referenzspannung,
- Abschalten des ersten Entladestroms,
- Erneutes Laden des Kondensators (C) bis zur Kondensatorspannung (Uco),
- Einschalten eines zweiten Entladestroms (i2), der eine zu dem ersten Entladestrom unterschiedliche Stromstärke besitzt, und Entladen des Kondensators bis zur Referenzspannung,
- Messen einer zweiten Entladezeit (t2) bis zum Erreichen der Referenzspannung,
- Bestimmung der Beleuchtungsstärke (E) aus der ersten und der zweiten Entladezeit (t1, t2) und den zugehörigen Entladeströmen (i1, i2).

**11.** Verfahren nach Anspruch 10, **dadurch gekennzeichnet, dass** die Bestimmung der jeweiligen Beleuchtungsstärke (E) nach der Formel E = (t2*i2 - t1*i1)/(S(t1-t2)) erfolgt, wobei S konstant ist und die spektrale Empfindlichkeit der Photodiode beschreibt.

**12.** Verfahren nach Anspruch 10, **dadurch gekennzeichnet, dass**
vor der periodischen Bestimmung der Beleuchtungsstärke mittels der Spannung am Lichtsensor (1) seine Polarität bestimmt wird und der Polaritätsumschalter (5) entsprechend eingestellt wird.

**13.** Verfahren nach Anspruch 12, **dadurch gekennzeichnet, dass**
der Kompensationskondensator (C0) periodisch mit dem Lade- und den Entladeströmen (i1, i2) beaufschlagt wird und daraus ein Kompensationswert für die Beleuchtungsstärke E = 0 berechnet wird, der von der mit dem Lichtsensor (1) bestimmten Beleuchtungsstärke (E) abgezogen wird.

**14.** Dämmerungsschalter mit einer Vorrichtung nach einem der Ansprüche 1 bis 9, dessen Steuereinheit (2) so gestaltet ist, das sie ein Verfahren nach einem der Ansprüche 10 bis 13 ausführt, sowie einem Eingabemittel (9) und einem Ausgangsschaltglied (7) zum Ein- und Ausschalten von elektrischen Verbrauchern.

**15.** Dämmerungsschalter nach Anspruch 14, **dadurch gekennzeichnet, dass** über das Eingabemittel (9) die Einstellung des Schwellwertes der Beleuchtungsstärke zum Ein- und Ausschalten des Ausgangsschaltgliedes (7) erfolgt.

**16.** Dämmerungsschalter nach Anspruch 15, **dadurch gekennzeichnet, dass** bei dem Über- oder Unterschreiten eines Schwellwertes der Beleuchtungsstärke von der Recheneinheit (6) ein entsprechendes Schaltsignal an dem Ausgangsschaltglied (7) erzeugt wird.

**17.** Dämmerungsschalter nach Anspruch 15, **dadurch gekennzeichnet, dass** das Eingabemittel (9) mit einer logarithmischen Einstellskala versehen ist, die mindestens fünf Zehnerpotenzen überdeckt.

**18.** Dämmerungsschalter nach Anspruch 14 **dadurch gekennzeichnet, dass** eine Zustandsanzeige (11) vorgesehen ist, die die Unter- oder Überschreitung des eingestellten Schwellwertes durch die aktuelle Beleuchtungsstärke unverzögert anzeigt.

**19.** Dämmerungsschalter nach Anspruch 16, **dadurch gekennzeichnet, dass** eine Zeitverzögerungseinheit (12) vorgesehen ist, die das Ausgangsschaltglied (7), bezogen auf die Unter- oder Überschreitung des eingestellten Schwellwertes der Beleuchtungsstärke (E), zeitverzögert ein- oder ausschaltet.

**Claims**

**1.** Device for measuring a lighting level (E) with a light sensor (1) and a control unit (2), wherein the light sensor (1) consists of a photodiode (P) that is operated in the reverse direction and of a capacitor (C) connected in parallel with it, **characterized in that** the control unit (2) comprises a charging circuit for charging the capacitor to a capacitor voltage (Uco) and two sources of discharging current (i1, i2) with a first discharging current (i1) and a different second discharging current (i2), which discharge the capacitor (C) periodically, and that a time measuring device (Z) measures the discharge time (t1, t2) of the capacitor (C), and the ratio of said discharge times (t1, t2) is used to determine the lighting level (E).

**2.** Device according to claim 1, **characterized in that** the control unit (2) has a polarity detection and a polarity selector switch (5) for the light sensor (1).

**3.** Device according to claim 1, **characterized in that** the charging circuit consists of a voltage source (Uco) with a negligible internal resistance.

**4.** Device according to claim 1, **characterized in that** the control unit generates control pulses for periodically switching on the sources of discharging current (i1, i2).

5. Device according to claim 4, **characterized in that** alternately only one of the sources of discharging current (i1, i2) is switched on or that alternately one and then both sources of discharging current are switched on.

6. Device according to claim 4, **characterized in that** a reference voltage (Uref) and a comparator (K) are provided in the control unit (2), by means of which the discharge times (t1, t2) are measured starting when the sources of discharging current are switched on.

7. Device according to claim 1, **characterized in that** an arithmetic unit (6) is provided in the control unit (2) which determines the current lighting level (E) from the discharging times (t1, t2) and the two discharging currents (i1, i2).

8. Device according to claim 7, **characterized in that** a compensation capacitor (C0) is provided, which is periodically applied to the charging and the discharging currents (i1, i2).

9. Device according to claim 7, **characterized in that** the control unit (2) outputs the determined lighting level (E) at a signal output (4) in analog or digital form.

10. Method for determining a lighting level with a first step in which a device according to any of the above claims is provided, and with a continuous process comprising the following steps:

    - Charging the capacitor (C) to a capacitor voltage (Uco)
    - Discharging the capacitor to the reference voltage (Uref) with a first discharging current (i1),
    - Measuring a first discharge time (t1) until the reference voltage is reached,
    - Switching off the first discharging current,
    - Re-charging the capacitor (C) to the capacitor voltage (Uco)
    - Switching on a second discharging current (i2), the amperage of which is different from that of the first discharging current, and discharging the capacitor to the reference voltage,
    - Measuring a second discharge time (t2) until to the reference voltage is reached,
    - Determining the lighting level (E) from the first and second discharge time (t1, t2) and the corresponding discharging currents (i1, i2).

11. Method according to claim 10, **characterized in that** the respective lighting level (E) is determined according to the formula E = (t2 * i2 - t1 * i1) / (S (t1-t2)), wherein S is a constant, and specifies the spectral sensitivity of the photodiode.

12. A method according to claim 10, **characterized in that**, by means of the voltage at the light sensor (1), its polarity is determined, and the polarity switch (5) is set accordingly, before the lighting level is periodically determined.

13. A method according to claim 12, **characterized in that** the charging currents and the discharging currents (i1, i2) are applied periodically to the compensation capacitor (C0), and are used to calculate a compensation value for the lighting level E = 0, which is then subtracted from the lighting level (E) determined by the light sensor (1).

14. Twilight switch with a device according to one of the claims 1 to 9, the control unit of which is designed in such a way that it carries out a method according to one of the claims 10 to 13, and with an input means (9) and an output switching element (7) for switching on and off electrical consumer loads.

15. Twilight switch according to claim 14, **characterized in that** the input means (9) is used to adjust the threshold value of the lighting level for switching on and off the output switching element (7).

16. Twilight switch according to claim 15, **characterized in that** when the lighting level rises above or falls below a threshold value, the computing unit (6) generates a corresponding switching signal at the output switching element (7).

17. Twilight switch according to claim 15, **characterized in that** the input means (9) is provided with a logarithmic setting scale, which covers at least five powers of ten.

18. Twilight switch according to claim 14, **characterized in that** a status indicator is provided (11), indicating without delay when the current lighting level falls below or rises above the set threshold value.

19. Twilight switch according to claim 16, **characterized in that** a time delay unit (12) is provided, which switches on or off the output switching element (7) with a time delay after the light intensity (E) falls below or rises above the set threshold value.

**Revendications**

1. Dispositif pour mesurer une intensité lumineuse (E) avec un capteur de lumière (1) et une unité de commande (2), le capteur de lumière (1) étant constitué d'une photodiode (P) qui fonctionne dans le sens bloqué et d'un condensateur (C) monté en parallèle, **caractérisé en ce que** l'unité de commande (2) comprend un circuit de charge pour charger le condensateur à une tension de condensateur (Uco) et deux sources de courant de décharge (i1, i2) avec un courant de décharge premier (i1) et un deuxième courant de décharge (i2) différent à celui-ci, qui déchargent de façon périodique le condensateur (C), ainsi qu'un dispositif de mesure de temps (Z) qui mesure les temps de décharge (t1, t2) du condensateur (C), et le rapport desdits temps de décharge (t1, t2) est utilisé pour déterminer l'intensité lumineuse (E).

2. Dispositif selon la revendication 1, **caractérisé en ce que** l'unité de commande (2) comporte une détection de polarité et un commutateur de polarité (5) pour le capteur de lumière (1).

3. Dispositif selon la revendication 1, **caractérisé en ce que** le circuit de charge est constitué d'une source de tension (Uco) avec une résistance interne négligeable.

4. Dispositif selon la revendication 1, **caractérisé en ce que** l'unité de commande génère des impulsions de commande pour commuter périodiquement les sources de courant de décharge (i1, i2).

5. Dispositif selon la revendication 4, **caractérisé en ce que** les sources de courant de décharge (i1, i2) sont mises en circuit en alternance ou que l'une et ensuite les deux sources de courant de décharge sont mises en circuit en alternance.

6. Dispositif selon la revendication 4, **caractérisé en ce qu'**une tension de référence (Uref) et un comparateur (K) sont prévus dans l'unité de commande (2), au moyen desquels les temps de décharge (t1, t2) sont mesurés lorsque les sources de courant de décharge sont activés.

7. Dispositif selon la revendication 1, **caractérisé en ce qu'**une unité arithmétique (6) est prévue dans l'unité de commande (2), qui détermine le niveau de l'intensité lumineuse (E) à partir des temps de décharge (t1, t2) et les deux courants de décharge (i1, i2).

8. Dispositif selon la revendication 7, **caractérisé en ce qu'**un condensateur de compensation (C0) est prévu, qui est périodiquement alimenté par les courants de charge et les courants de décharge (i1, i2).

9. Dispositif selon la revendication 7, **caractérisé en ce que** l'unité de commande (2) fournit le niveau de l'intensité lumineuse (E) déterminé à une sortie de signal (4) sous forme analogique ou numérique.

10. Procédé pour déterminer un niveau d'intensité lumineuse avec une première étape dans laquelle un dispositif selon l'une quelconque des revendications ci-dessus est prévu, et avec un procédé continu comprenant les étapes suivantes:

- Charger le condensateur (C) à une tension de condensateur (Uco)
- Décharger le condensateur à la tension de référence (Uref) au moyen d'un courant de décharge premier (i1),
- Mesurer un premier temps de décharge (t1) jusqu'à ce que la tension de référence soit atteinte,
- Eteindre le premier courant de décharge,
- Charger de nouveau le condensateur (C) à la tension de condensateur (Uco)
- Commuter un second courant de décharge (i2), dont l'ampérage est différente de celle du premier courant de décharge, et décharger le condensateur à la tension de référence,
- Mesurer un deuxième temps de décharge (t2) jusqu'à ce que la tension de référence soit atteinte,
- Déterminer l'intensité lumineuse (E) à partir du premier et deuxième temps de décharge (t1, t2) et des courants de décharge correspondants (i1, i2).

11. Procédé selon la revendication 10, **caractérisé en ce que** l'intensité lumineuse respective (E) est déterminée selon la formule E = (t2 * i2 - t1 * i1) / (S (t1-t2)), dans lequel S est une constante, et spécifie la sensibilité spectrale de la photodiode.

12. Procédé selon la revendication 10, **caractérisé en ce que**, au moyen de la tension au niveau du capteur de lumière (1), sa polarité est déterminée, et le commutateur de polarité (5) est réglée en conséquence, avant que l'intensité lumineuse est périodiquement déterminée.

13. Procédé selon la revendication 12, **caractérisé en ce que** les courants de charge et les courants de décharge (i1, i2) sont appliquées périodiquement au condensateur de compensation (C0), à partir desquels une valeur de compensation pour l'intensité lumineuse E = 0 est calculé, qui est soustraite de l'intensité lumineuse (E) déterminée par le capteur de lumière (1).

14. Interrupteur crépusculaire doté d'un dispositif selon l'une quelconque des revendications 1 à 9, dont l'unité de commande est conçue de telle sorte qu'elle exécute un procédé selon l'une quelconque des revendications 10 à 13, et avec un moyen d'entrée (9) et un élément de commutation de sortie (7) pour allumer et éteindre les consommateurs électriques.

**15.** Interrupteur crépusculaire selon la revendication 14, **caractérisé en ce que** le moyen d'entrée (9) est utilisé pour ajuster la valeur de seuil de l'intensité lumineuse pour allumer et éteindre l'élément de commutation de sortie (7).

**16.** Interrupteur crépusculaire selon la revendication 15, **caractérisé en ce que** lorsque l'intensité lumineuse dépasse ou tombe en dessous d'une valeur seuil, l'unité de calcul (6) génère un signal de commutation à l'élément de commutation de sortie (7).

**17.** Interrupteur crépusculaire selon la revendication 15, **caractérisé en ce que** le moyen d'entrée (9) est doté d'une échelle logarithmique de réglage, qui couvre au moins cinq puissances de dix.

**18.** Interrupteur crépusculaire selon la revendication 14, **caractérisé en ce qu'**un indicateur d'état est fournie (11), qui indique sans délai lorsque le niveau de l'intensité lumineuse tombe en dessous de ou dépasse la valeur de seuil définie.

**19.** Interrupteur crépusculaire selon la revendication 16, **caractérisé en ce qu'**une unité de temporisation (12) est prévu, qui allume ou éteint l'élément de commutation de sortie (7) avec un retard après que ne niveau de l'intensité lumineuse (E) tombe en dessous de ou dépasse la valeur de seuil.

**Fig. 1**

**Fig. 2**

## Fig. 3

## Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2757563 C2
- DE 3215096 A1
- DE 29912801 U1
- GB 1359105 A
- US 5502299 A
- DE 69613765 T2
- US 20090109427 A1
- DE 10125307 A1